# EUROPÄISCHE PATENTSCHRIFT

(11) **EP 2 086 803 B1**
(45) Veröffentlichungstag und Bekanntmachung des Hinweises auf die Patenterteilung: **16.06.2010**
(21) Anmeldenummer: 07803565.6
(22) Anmeldetag: 20.09.2007
(51) Int. Cl.: B60S 1/38

(54) **WISCHBLATT**
WIPER BLADE
ESSUIE-GLACE

(30) Priorität: 07.11.2006 DE 102006052465
(43) Veröffentlichungstag der Anmeldung: 12.08.2009
(73) Patentinhaber: Robert Bosch GmbH, 70442 Stuttgart (DE)
(72) Erfinder: AZNAG, Mohamed, 3271 Scherpenheuvel-Zichem (BE)
(86) Internationale Anmeldenummer: PCT/EP2007/059983
(87) Internationale Veröffentlichungsnummer: WO 2008/055740

(56) Entgegenhaltungen:
- WO-A-01/51324
- DE-A1- 10 257 553
- DE-A1- 10 330 702
- DE-A1- 10 334 609
- DE-A1- 19 734 843

## Beschreibung

### Stand der Technik

Die Erfindung geht von einem Wischblatt nach dem Oberbegriff des Anspruchs 1 aus.

Aus der DE 197 34 843 A1 ist ein Wischblatt bekannt, dessen Grundkörper in üblicher Weise mit einer Wischlippe verbunden ist. An der der Wischlippe gegenüberliegenden Seite ist ein Spoiler über einen Steg an den Grundkörper angeformt. Der Spoiler und der Grundkörper können in einem Mehrstoffextrudierverfahren hergestellt werden, wenn unterschiedliche Materialien für den Grundkörper und den Spoiler verwendet werden. Durch den Verbindungssteg werden zwischen dem Spoiler und dem Grundkörper zwei Längsnuten gebildet, in denen eine haarnadelförmige Federschiene eingebettet ist. Zum Anschluss des Wischblatts an einen Wischarm ist im mittleren Bereich des Wischblatts ein Anschlusselement vorgesehen.

Ferner ist aus der DE 103 34 609 A1 ein Wischblatt mit einem Grundkörper und einem angeformten Spoiler bekannt, wobei der Spoiler und der Grundkörper aus unterschiedlichen Materialien bestehen und in einem Mehrstoffextrudierverfahren hergestellt werden. Der Grundkörper besitzt in seiner Kopfleiste einen Längskanal, in dem eine bandartige, vorgekrümmte Federschiene angeordnet ist.

### Offenbarung der Erfindung

Nach der Erfindung weist der Wischgummi auf der dem Spoiler zugewandten Seite eine u-förmige Längsnut auf, in die eine Längsrippe des Spoilers passt, wobei der Spoiler und der Wischgummi in einem Spritzgießverfahren miteinander verbunden sind. Durch das Spritzgießverfahren kann das Wischblatt bereits mit einer Krümmung versehen werden, die für die Verteilung der Anpresskraft in Längsrichtung bei gekrümmten Fahrzeugscheiben erforderlich ist. Gleichzeitig besitzt der Spoiler zum Wischgummi hin große Verbindungsflächen, sodass die flächenspezifische Beanspruchung in den Übergangsbereichen zwischen den unterschiedlichen Werkstoffen sehr gering ist und eine lange Dauerstandfestigkeit erreicht wird. Diese Eigenschaften können noch dadurch verbessert werden, wenn gemäß einer Ausgestaltung der Erfindung das Material des Spoilers in Durchbrüche oder Aussparungen eingreift, die in seitlichen Schenkeln der Längsnut vorgesehen sind. Die seitlichen Schenkel der Längsnut, die die Längsrippe des Spoilers umfassen, schließen aus optischen und strömungstechnischen Gründen zweckmäßigerweise bündig an die Kontur des Spoilers an.

Zur Unterstützung der Federeigenschaften des Wischblatts ist es zweckmäßig, dass in der Längsrippe des Spoilers mehrere Federschienen eingegossen sind. Diese werden in vorteilhafter Weise in einer Längsmittelebene versetzt zueinander angeordnet. Sie können sowohl in Bezug auf ihre Anzahl, Länge und/oder Breite als auch in Bezug auf ihre Querschnittsformen auf die Erfordernisse des Einsatzfalls abgestimmt werden. Sie werden als Einlegeteile in die Spritzgießform eingelegt und mit dem Spoilermaterial verbunden, sodass eine definierte Lage der Federschienen zueinander und zu den übrigen Wischblattkomponenten erzielt wird.

Gemäß einer Ausgestaltung der Erfindung ist im mittleren Bereich des Wischblatts ein Fenster vorgesehen, in dem an den Spoiler ein Lagerelement angeformt ist, z.B. in Form einer Nabe oder von Lagerzapfen. Mit diesem Lagerteil kann ein Verbindungselement gelenkig verbunden werden, in vorteilhafter Weise, indem es auf das Lagerteil geklippst wird.

### Kurze Beschreibung der Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Teilansicht eines Wischblatts,
- Fig. 2: ein Ende eines Wischblatts nach Fig. 1 in einem ver- größerten Maßstab und
- Fig. 3: eine perspektivische Teilansicht eines mittleren Be- reichs eines Wischblatts nach Fig. 1 mit einem Verbin- dungselement.

### Ausführungsformen der Erfindung

Ein Wischblatt 10 besteht im Wesentlichen aus einem Wischgummi 12 mit einer Wischkante 14 und einem Spoiler 22. Der Wischgummi 12 kann im Bereich der Wischkante 14 entsprechend den vielfältigen bekannten Formen aus dem Stand der Technik gestaltet sein. Auf der dem Spoiler 22 zugewandten Seite bilden zwei seitliche Schenkel 16, 18 eine u-förmige Längsnut, in die eine Rippe 24 des Spoilers 22 passt. Das Wischblatt 10 wird in einem Spritzgießverfahren hergestellt, wobei der Spoiler 22 und der Wischgummi 12 miteinander fest verbunden werden. Zur besseren Verbindung können die seitlichen Schenkel 16, 18 Durchbrüche 20 besitzen, in die das Material des Spoilers 22 während des Spritzgießverfahrens eindringt. Die Durchbrüche 20 können nach außen geschlossen sein, sodass sich entsprechende, zum Inneren der Längsnut hin offene Aussparungen ergeben.

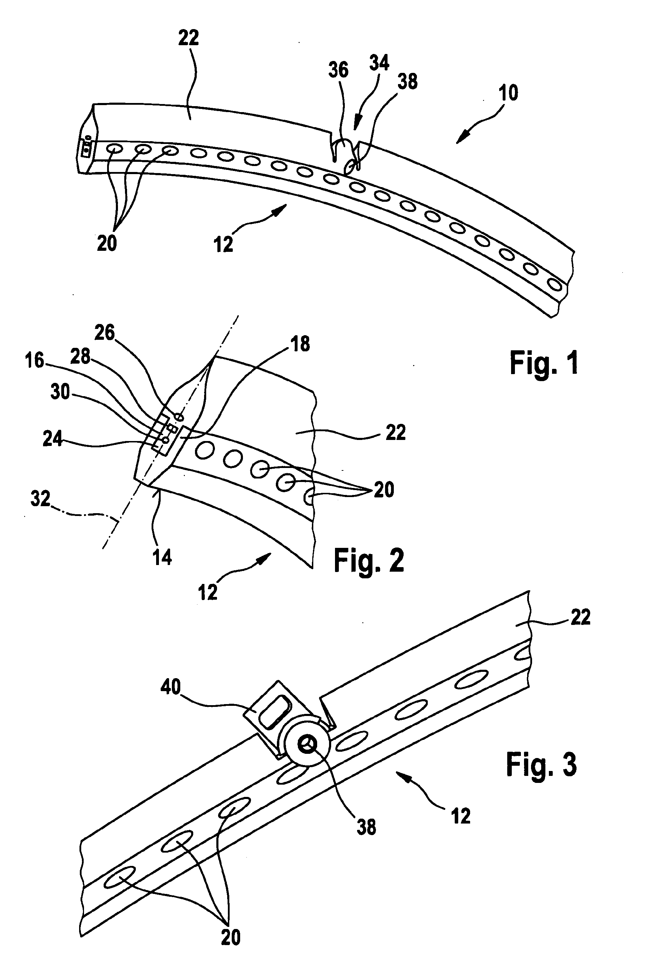

Das Querschnittprofil des Wischblatts 10 ist symmetrisch zu einer Längsmittelebene 32 ausgebildet (Fig. 2). In der Rippe 24 des Spoilers 22 sind in der Längsmittelebene 32 versetzt zueinander Federschienen 26, 28, 30 eingegossen. Die Federschienen 26, 28, 30 können unterschiedliche Längen und Breiten, aber auch unterschiedliche Querschnittprofile aufweisen. Beispielhaft besitzt die Federschiene 26 einen ovalen, die Federschiene 28 einen rechteckigen und die Federschiene 30 einen runden Querschnitt. Grundsätzlich sind beliebige Querschnittformen möglich, durch die die Federsteifigkeit des Wischblatts 10 in der Längsmittelebene 32 und quer dazu modifiziert werden kann.

Im mittleren Bereich besitzt das Wischblatt 10 ein Fenster 34, indem an den Spoiler 22 ein Lagerteil 36 angeformt ist, das eine Bohrung 38 aufweist. Auf das Lagerteil 36 wird ein Verbindungselement 40 für einen nicht dargestellten Wischarm geklippst, der somit gelenkig mit dem Wischblatt 10 verbunden werden kann.

## Patentansprüche

1. Wischblatt (10) mit einem Wischgummi (12) und einem einstückig daran angeformten Spoiler (22) aus einem zum Wischgummi (12) unterschiedlichen Werkstoff sowie mit mindestens einer zu einer Wischkante (14) des Wischgummis (12) konkav gekrümmten Federschiene (26, 28, 30), **dadurch gekennzeichnet, dass** der Wischgummi (12) auf der dem Spoiler (22) zugewandten Seite eine u-förmige Längsnut aufweist, in die eine Längsrippe (24) des Spoilers (22) passt, wobei der Spoiler (22) und der Wischgummi (12) in einem Spritzgießverfahren miteinander verbunden sind.

2. Wischblatt (10) nach Anspruch 1, **dadurch gekennzeichnet, dass** das Material des Spoilers (22) in Durchbrüche (20) oder Aussparungen eingreift, die in seitlichen Schenkeln (16, 18) der Längsnut vorgesehen sind.

3. Wischblatt (10) nach Anspruch 1 oder 2, **dadurch gekennzeichnet, dass** die seitlichen Schenkel (16, 18) bündig an die Kontur des Spoilers (22) anschließen.

4. Wischblatt (10) nach einem der vorhergehenden Ansprüche, **dadurch gekennzeichnet, dass** in der Längsrippe (24) des Spoilers (22) mehrere Federschienen (26, 28, 30) eingegossen sind.

5. Wischblatt (10) nach Anspruch 4, **dadurch gekennzeichnet, dass** die Federschienen (26, 28, 30) einen runden, ovalen oder eckigen Querschnitt haben.

6. Wischblatt (10) nach Anspruch 4, **dadurch gekennzeichnet, dass** sich mindestens eine der Federschienen (26, 28, 30) im Querschnitt von den anderen unterscheidet.

7. Wischblatt (10) nach einem der vorhergehenden Ansprüche, **dadurch gekennzeichnet, dass** sein Querschnitt symmetrisch zu einer Längsmittelebene (32) ausgebildet ist.

8. Wischblatt (10) nach einem der Ansprüche 4 bis 7, **dadurch gekennzeichnet, dass** die Federschienen (26, 28, 30) in der Längsmittelebene (32) versetzt zueinander angeordnet sind.

9. Wischblatt (10) nach einem der vorhergehenden Ansprüche, **dadurch gekennzeichnet, dass** im mittleren Bereich in einem Fenster (34) des Spoilers (22) an dem Spoiler (22) ein quer zur Längsrichtung verlaufendes Lagerteil (36) angeformt ist.

10. Wischblatt (10) nach Anspruch 9, **dadurch gekennzeichnet, dass** auf das Lagerteil (36) ein schwenkbares Verbindungselement (40) geklippst ist.

## Claims

1. Wiper blade (10) with a wiper blade rubber (12) and a spoiler (22) which is integrally formed thereon and is composed of a different material from the wiper blade rubber (12), and with at least one spring rail (26, 28, 30) which is curved concavely with respect to a wiping edge (14) of the wiper blade rubber (12), **characterized in that that** side of the wiper blade rubber (12) which faces the spoiler (22) has a U-shaped longitudinal groove into which a longitudinal rib (24) of the spoiler (22) fits, the spoiler (22) and the wiper blade rubber (12) being connected to each other by injection moulding.

2. Wiper blade (10) according to Claim 1, **characterized in that** the material of the spoiler (22) engages in apertures (20) or cut-outs which are provided in lateral limbs (16, 18) of the longitudinal groove.

3. Wiper blade (10) according to Claim 1 or 2, **characterized in that** the lateral limbs (16, 18) are attached flush to the contour of the spoiler (22).

4. Wiper blade (10) according to one of the preceding claims, **characterized in that** a plurality of spring rails (26, 28, 30) is cast in the longitudinal rib (24) of the spoiler (22).

5. Wiper blade (10) according to Claim 4, **characterized in that** the spring rails (26, 28, 30) have a round, oval or angular cross section.

6. Wiper blade (10) according to Claim 4, **characterized in that** at least one of the spring rails (26, 28, 30) differs in cross section from the other spring rails.

7. Wiper blade (10) according to one of the preceding claims, **characterized in that** its cross section is formed symmetrically with respect to a longitudinal centre plane (32).

8. Wiper blade (10) according to one of Claims 4 to 7, **characterized in that** the spring rails (26, 28, 30) are arranged offset with respect to one another in the longitudinal centre plane (32).

9. Wiper blade (10) according to one of the preceding claims, **characterized in that** a bearing part (36) running transversely with respect to the longitudinal direction is integrally formed on the spoiler (22) in a window (34) in the central region of the spoiler (22).

10. Wiper blade (10) according to Claim 9, **characterized in that** a pivotable connecting element (40) is clipped onto the bearing part (36).

## Revendications

1. Balai d'essuie-glace (10) comprenant une raclette d'essuie-glace (12) et un béquet (22) formé d'une seule pièce sur celle-ci, constitué d'un matériau différent de celui de la raclette d'essuie-glace (12), et au moins un rail élastique (26, 28, 30) de courbure concave par rapport à une arête d'essuie-glace (14) de la raclette d'essuie-glace (12), **caractérisé en ce que** la raclette d'essuie-glace (12) présente, sur le côté tourné vers le béquet (22), une rainure longitudinale en forme de u, dans laquelle s'adapte une nervure longitudinale (24) du béquet (22), le béquet (22) et la raclette d'essuie-glace (12) étant connectés l'un à l'autre par un procédé de moulage par injection.

2. Balai d'essuie-glace (10) selon la revendication 1, **caractérisé en ce que** le matériau du béquet (22) vient en prise dans des orifices (20) ou des évidements qui sont prévus dans des branches latérales (16, 18) de la rainure longitudinale.

3. Balai d'essuie-glace (10) selon la revendication 1 ou 2, **caractérisé en ce que** les branches latérales (16, 18) se raccordent en affleurement avec le contour du béquet (22).

4. Balai d'essuie-glace (10) selon l'une quelconque des revendications précédentes, **caractérisé en ce que** plusieurs rails élastiques (26, 28, 30) sont coulés dans la nervure longitudinale (24) du béquet (22).

5. Balai d'essuie-glace (10) selon la revendication 4, **caractérisé en ce que** les rails élastiques (26, 28, 30) présentent une section transversale ronde, ovale ou polygonale.

6. Balai d'essuie-glace (10) selon la revendication 4, **caractérisé en ce qu'**au moins l'un des rails élastiques (26, 28, 30) a une section transversale différente des autres.

7. Balai d'essuie-glace (10) selon l'une quelconque des revendications précédentes, **caractérisé en ce que** sa section transversale est réalisée de manière symétrique par rapport à un plan médian longitudinal (32).

8. Balai d'essuie-glace (10) selon l'une quelconque des revendications 4 à 7, **caractérisé en ce que** les rails élastiques (26, 28, 30) sont disposés de manière décalée les uns par rapport aux autres dans le plan médian longitudinal (32).

9. Balai d'essuie-glace (10) selon l'une quelconque des revendications précédentes, **caractérisé en ce que** dans la région centrale, dans une fenêtre (34) du béquet (22), est façonnée, sur le béquet (22), une partie de palier (36) s'étendant transversalement à la direction longitudinale.

10. Balai d'essuie-glace (10) selon la revendication 9, **caractérisé en ce qu'**un élément de connexion (40) pivotant est enclipsé sur la partie de palier (36).
